(19) Europäisches Patentamt
European Patent Office
Office européen des brevets

(11) **EP 2 589 977 B1**

(12) **EUROPÄISCHE PATENTSCHRIFT**

(45) Veröffentlichungstag und Bekanntmachung des Hinweises auf die Patenterteilung:
**04.05.2016   Patentblatt 2016/18**

(51) Int Cl.:
*G01S 3/808* *(2006.01)*      *G01S 3/82* *(2006.01)*

(21) Anmeldenummer: **12187345.9**

(22) Anmeldetag: **05.10.2012**

(54) **Verfahren und Vorrichtung zum Korrigieren systematischer Peilfehler**

Method and apparatus for correcting systematic DF errors

Procédé et dispositif de correction d'une erreur de relèvement systématique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.11.2011   DE 102011117591**

(43) Veröffentlichungstag der Anmeldung:
**08.05.2013   Patentblatt 2013/19**

(73) Patentinhaber: **ATLAS ELEKTRONIK GmbH
28309 Bremen (DE)**

(72) Erfinder:
• **Ruthotto, Dipl.-Ing. Eicke
28359 Bremen (DE)**
• **Steimel, Dr. Ulrich
28876 Oyten (DE)**
• **Steiner, Dipl.-Ing. Hans-Joachim
28359 Bremen (DE)**

(74) Vertreter: **Lecomte & Partners
P.O. Box 1623
1016 Luxembourg (LU)**

(56) Entgegenhaltungen:
DE-A1-102007 019 979      JP-A- 59 104 577
US-A1- 2008 034 871

**Beschreibung**

Die Erfindung betrifft ein Verfahren zum Korrigieren systematischer Peilfehler einer akustischen Peilanlage der im Oberbegriff des Anspruchs 1 genannten Art. Ferner betrifft die Erfindung eine Vorrichtung zum Ausführen des Verfahrens gemäß dem Oberbegriff von Anspruch 9.

In der Wasserschalltechnik werden mittels akustischer Peilanlagen Schallwellen bzgl. ihrer Einfallsrichtung zum Peilen von Zielen ausgewertet. Die von einem Wasserfahrzeug oder einer sonstigen Schallquelle abgestrahlten oder reflektierten Schallwellen werden über eine Empfangsantenne empfangen, wobei die Empfangsantenne eine Vielzahl elektroakustische Wandler zum Erzeugen von elektrischen Empfangssignalen aufweist.

Ein derartiges Verfahren ist bspw. in DE 100 27 538 C1 beschrieben. Hier werden die Empfangssignale im Zeitbereich durch Zusammenfassung der zeitverzögerten und/oder phasenverschobenen Empfangssignale zu Gruppensignalen zusammengefasst, um eine Peilung über eine Richtungsbildung mittels Richtcharakteristiken zu erlangen. Die Zeitverzögerungen werden für alle Gruppensignale gespeichert, die für die unterschiedlichen Einfallsrichtungen der Schallwellen gebildet worden sind.

Aufgrund von Fertigungstoleranzen beim Einbau der Wandler in die Empfangsantenne und/oder beim Anbau der Empfangsantenne an den Antennenträger, wie bspw. Schiff oder U-Boot, weichen die berechneten und abgespeicherten Verzögerungszeiten mehr oder weniger stark von den korrekten Verzögerungszeiten ab. Dies führt dazu, dass die Richtcharakteristik nicht exakt gebildet wird und die entsprechende Peilung der Schallquelle mit einem mehr oder weniger großen Fehler behaftet ist.

Ferner entstehen Peilfehler durch den die akustischen Wandler umgebenden Hüllkörper, dessen Dichte und Materialkonstante relativ große Toleranzen aufweisen können. An vorhandenen Halterungen für die Hüllkörper und/oder durch die gegebene Schiffsform werden die einfallenden Schallwellen verzerrt, was ebenfalls zu systematischen Peilfehlern führt.

DE 103 53 292 B3 zeigt ein Verfahren zur Bildung eines Gruppensignals einer Richtcharakteristik einer Wandleranordnung. Hier werden Peilfehler ausgeglichen, indem die Verzögerungszeiten in einem rekursiven Berechnungsverfahren solange vergrößert werden, bis der Pegel des Gruppensignals maximal ist. Das hier beschriebene Verfahren ist jedoch lediglich bei nicht-linearen Wandleranordnungen anwendbar, die aus einer Gruppe von gemeinsamen betriebenen, auf einem gekrümmten Träger angeordneten, elektroakustischen Wandlern bestehen.

DE 10 2006 019 588 B3 zeigt ein weiteres Verfahren, welches systematische Peilfehler bereits in den verzögerten Empfangssignalen ausgleicht, so dass sich aus den Gruppensignalen eine Lagedarstellung ohne systematischen Peilfehler ergibt. Bei dem hier beschriebenen Verfahren werden Zeitverzögerungskoeffizienten durch Peilen eines Kunstziels, welches mit bekannten Positionen um das Trägerfahrzeug der Peilanlage herumfährt, bestimmt und abgespeichert. Bei einer anschließenden Zielpeilung werden zum Bestimmen von Peilwinkel die zugehörigen, abgespeicherten Sätze von Zeitverzögerungskoeffizienten auf die Empfangssignale angewendet. Dieses herkömmliche Verfahren zum Korrigieren von systematischen Peilfehlern ist jedoch kostenintensiv und zeitaufwändig und wird daher nur als Funktionsprüfung nach dem Einbau der Empfangsanlage durchgeführt. Die auf diese Weise korrigierten, sensorspezifischen Peilfehler können sich jedoch im Laufe der Zeit ändern, z.B. durch Erschütterungen bei Anlegemanövern oder durch Wartungsarbeiten am Sensor. Derartige Peilfehler werden ohne erneutes Durchführen des vorstehend beschriebenen Verfahrens nicht erkannt.

DE 10 2007 019 979 AI offenbart ein Verfahren und eine Vorrichtung gemäß dem Oberbegriff der Ansprüche 1 und 9.
US 2008/0034871 A1 offenbart ein Verfahren zur Überprüfung der Ergebnisse eines Verfahrens zur passiven Bestimmung von Zielparametern eines schallabstrahlenden Ziels.

Der Erfindung liegt nach alledem das Problem zugrunde, ein besseres Verfahren zum Korrigieren systematischer Peilfehler einer akustischen Peilanlage zu schaffen.

Die Erfindung löst dieses Problem durch die Merkmale eines Verfahrens zum Korrigieren von systematischen Peilfehlern gemäß Anspruch 1 sowie durch eine Vorrichtung mit den Merkmalen des Anspruchs 9.

Das erfindungsgemäße Verfahren hat den Vorteil, die vorhandenen sensorspezifischen Korrekturtabellen, welche während einer Funktionsprüfung für jede Empfangsantenne separat erstellt werden, oder neu angelegte sensorspezifische Korrekturtabellen im laufenden Betrieb der Peilanlage laufend zu aktualisieren und die in der Korrekturtabelle enthaltenen Peilungskorrekturwerte ständig zu verbessern.

Darüber hinaus bietet das erfindungsgemäße Verfahren erhebliche Vorteile für die Zielparameterbestimmung mittels eines TMA-Verfahrens (Target Motion Analysis), bei welchem aus passiv ermittelten Peilungen Positionen von Zielen sowie deren Bewegungsrichtung und Bewegungsgeschwindigkeit als Zielparameter geschätzt werden. Da sich die sensorspezifischen systematischen Peilfehler negativ auf die Leistungsfähigkeit des TMA-Verfahrens auswirken, verbessert das erfindungsgemäße Verfahren dieses TMA-Verfahren. Durch die Korrektur des systematischen Peilfehlers der Peilanlage können in sehr viel kürzerer Zeit zuverlässige Schätzungen der Zielparameter erreicht werden, da das TMA-Verfahren unter Verwendung der korrigierten Peilwinkel sehr viel schneller konvergiert. Zur Erläuterung des TMA-Verfahrens werden auf die DE 101 29 726 C2 und DE 34 46 658 C2 verwiesen.

Die Erfindung hat erkannt, die Ergebnisse eines erfolgreichen TMA-Durchlaufs für einen iterativen Aufbau von Korrekturtabellen für sensorspezifische Peilfehler zu nutzen. Dabei werden Peilungskorrekturwerte im laufenden Betrieb der Peilanlage automatisch ermittelt und ständig verbessert. Dadurch kann eine aufwändige Kalibrierung der einzelnen Empfangsantennen entfallen.

Mit einer akustischen Peilanlage, insbesondere einer Sonaranlage, mit wenigstens einer Empfangsantenne mit einer Vielzahl von elektroakustischen und/oder optoakustischen Wandlern werden richtungsselektiv Schallwellen, die von einem Ziel abgestrahlt oder gesendet werden, empfangen. Die Empfangssignale einer, mehrerer oder aller Empfangsantennen werden dazu einer Signalverarbeitung unterzogen, um zu den Zielen zugeordnete gemessene Peilwinkel zu ermitteln. Diese gemessenen Peilwinkel können mittels einer der Empfangsantenne zugeordneten Korrekturtabelle vorkorrigiert werden, sofern eine derartige Korrekturtabelle vorliegt.

Es wird zu vorbestimmten Messzeitpunkten eine Zielposition eines Ziels ermittelt, um dann wenigstens ein Peilungsresiduum zu ermitteln. Das Peilungsresiduum ist die Abweichung zwischen dem gemessenen Peilwinkel oder dem vorkorrigierten Peilwinkel und einem zu der ermittelten Zielposition zugehörigen Peilwinkel zu wenigstens einem vorbestimmten Messzeitpunkt. In einer Peilungskorrekturwerterfassungseinheit wird für eine, mehrere oder alle Empfangsantennen die Korrekturtabelle zum Vorkorrigieren der gemessenen Peilwinkel anhand der zur jeweiligen Empfangsantenne ermittelten Peilungsresiduen erstellt oder aktualisiert. Die systematischen Peilfehler können je gemessenen Peilwinkel einer, mehrerer oder aller Empfangsantennen entsprechend zugehöriger Peilungskorrekturwerte der Korrekturtabelle mittels eines Korrekturmoduls korrigiert werden.

Somit ermöglicht das erfindungsgemäße Verfahren vorteilhaft auch die Erfassung und Korrektur von sensorspezifischen Peilfehlern, die sich im Laufe der Zeit aufgrund kleiner mechanischer Veränderungen der Sensorinstallation ergeben.

In einer bevorzugten Ausführungsform der Erfindung wird die Korrekturtabelle einer, mehrerer oder aller Empfangsantennen mit Nullen als Peilungskorrekturwerte oder mit mittels einer zuvor durchgeführten Funktionsprüfung der zugehörigen Empfangsantenne ermittelten Peilungskorrekturwerten gefüllt. Im Laufe des Verfahrens wird die Korrekturtabelle zum Vorkorrigieren der gemessenen Peilwinkel einer, mehrerer oder aller Empfangsantennen mindestens einmal aktualisiert. Die Aktualisierung erfolgt, indem aktuelle Peilungskorrekturwerte anhand vorhandener Peilungskorrekturwerte, der ermittelten Abweichungen und der gemessenen, unkorrigierten Peilwinkel ermittelt werden und in die Korrekturtabelle aufgenommen werden.

Die Verwendung einer Korrekturtabelle mit Daten aus einer Funktionsprüfung hat dabei den Vorteil, eine genauere Lagebestimmung der Ziele vornehmen zu können, da der installationsbedingte, systematische Peilfehler bereits vorkorrigiert wird. Ein Auffüllen der Korrekturtabelle mit Nullen hat hingegen den Vorteil, dass eine aufwändige Funktionsprüfung bzw. Kalibrierung der einzelnen Empfangsantennen entfallen kann, da die Peilungskorrekturwerte im laufenden Betrieb ständig verbessert werden.

Gemäß einer weiteren Ausführungsform der Erfindung wird die Zielposition des Ziels mittels eines Verfahrens zum Bestimmen von Zielparametern, insbesondere eines TMA-Verfahrens (Target Motion Analysis), geschätzt und/oder mittels nicht-akustischer Sensoren, insbesondere Radar-Sensoren, und/oder AIS-Daten (Automatic Identification System) ermittelt. Durch die vorteilhafte Verwendung von vorhandenen Sensoren und/oder Verfahren zum Bestimmen einer Zielposition sind keine zusätzlichen Messungen für das Durchführen des erfindungsgemäßen Verfahrens notwendig.

In einer bevorzugten Ausführungsform der Erfindung werden die gemessenen Peilwinkel oder die vorkorrigierten Peilwinkel einer Empfangsantenne über einen vorbestimmten Zeitraum gemittelt. Vorzugsweise handelt es sich bei dem vorbestimmten Zeitraum um einen TMA-Verarbeitungszyklus. Die gemittelten Peilwinkel erhalten dann für die weitere Verarbeitung einen ebenfalls gemittelten Zeitstempel des TMA-Verarbeitungszyklus. Die gemittelten Peilwinkel werden dann entsprechend der für das erfindungsgemäße Verfahren zu berücksichtigenden Empfangsantenne gewichtet. Die Gewichtung kann dabei gemäß einem festen Schema oder variabel gemäß der Anzahl an Peilungskorrekturwerten in der zugehörigen Korrekturtabelle erfolgen.

Eine alternative Ausgestaltung der Erfindung sieht vor, die Peilwinkel erst über einen vorbestimmten Zeitraum zu mitteln und anschließend die gemittelten Peilwinkel mittels zugehöriger Korrekturtabellen zu filtern.

Zum Vorkorrigieren der Peilwinkel werden die Peilwinkel einer, mehrerer oder aller Empfangsantennen vorzugsweise mittels Sensorinstallationstabellen und Lageinformationen des Trägerfahrzeugs in sensorbezogene Peilwinkel umgerechnet und dann mit der zugehörigen zum aktuellen Zeitpunkt vorliegenden Korrekturtabelle der Empfangsantenne vorkorrigiert.

In einer weiteren bevorzugten Ausführungsform der Erfindung wird mittels des Residuenmoduls eine Häufigkeitsverteilung über sensorbezogener Peilung der ermittelten Peilungsresiduen bzw. den Abweichungen zwischen den gemessenen Peilwinkeln oder den vorkorrigierten Peilwinkeln und den zu den ermittelten Zielpositionen ermittelten Peilwinkeln für eine, mehrere oder alle Empfangsantennen erstellt. Bei Vorliegen einer hinreichend großen Anzahl an ermittelten Peilungsresiduen pro sensorbezogenem Peilwinkel wird eine Mittelung dieser ermittelten Peilungsresiduen durchgeführt. Bevorzugt wird die Häufigkeitsverteilung in ein Grad Schritten der sensorbezogenen Peilung über den gesamten Empfangsbereich der zugehörigen Empfangsantenne erstellt. Eine derartige Mittelung der Peilungsresiduen hat den Vorteil, dass sich das Messrauschen durch die Mittelung heraushebt und der systematische Peilfehler mit guter Genauigkeit ermittelt werden kann.

Gemäß einer weiteren Ausführungsform der Erfindung wird bei der Mittelung der ermittelten Peilungsresiduen eine Glättung über benachbarte Peilwinkel durchgeführt. Dies hat den Vorteil, Fluktuationen innerhalb der Korrekturtabelle zu reduzieren.

In einer weiteren Ausführungsform der Erfindung wird die Aktualisierung der Korrekturtabelle mittels der Peilungskorrekturwerterfassungseinheit unter Verwendung von Gewichtsfaktoren für die einzelnen sensorbezogenen Peilwinkel durchgeführt. Die Gewichtsfaktoren können dabei separat für jeden Peilwinkel festgelegt werden. Die Festlegung erfolgt entweder als fester Wert oder in Abhängigkeit von der Anzahl der bereits ermittelten Peilungskorrekturwerte zu diesem Peilwinkel in der Korrekturtabelle. Das hat den Vorteil, dass bei einer großen Anzahl an Peilungskorrekturwerten der Einfluss einer einzelnen Messung nicht zu groß ist.

In einer weiteren Ausführungsform der Erfindung wird die Aktualisierung der Korrekturtabelle mittels der Peilungskorrekturwerterfassungseinheit für diejenigen Peilwinkel durchgeführt, deren Anzahl an ermittelten Peilungsresiduen bzw. Peilungskorrekturwerten einen vorbestimmten Schwellenwert überschritten hat. Um das Messrauschen genügend zu entfernen, sollte eine Aktualisierung der Korrekturtabelle erst erfolgen, wenn mittels des Residuenmoduls hinreichend viele Peilungsresiduen pro Peilwinkel gesammelt wurden. Bevorzugt weist das erfindungsgemäße Verfahren entsprechende Mittel auf, um einzelne Peilwinkel, für die noch nicht hinreichend viele neue Werte gesammelt wurden, von der Aktualisierung auszuschließen.

Gemäß einer weiteren bevorzugten Ausführungsform der Erfindung wird bei der Ermittlung der Zielposition mit nicht-akustischen Sensoren, insbesondere Radar-Sensoren, und/oder AIS-Daten (Automatic Identification System) bei Vorliegen einer kontinuierlichen Messreihe dieser Sensoren eine Glättung von Messdaten dieser Messreihe und/oder eine Interpolation auf die vorbestimmten Messzeitpunkte durchgeführt. Dadurch wird vorteilhafterweise eine Genauigkeitssteigerung bei der Ermittlung der Peilungsresiduen zwischen den gemessenen Peilwinkeln oder den vorkorrigierten Peilwinkeln und den zu den ermittelten Zielpositionen zugehörigen Peilwinkeln erzielt. Ist mittels Interpolation die Zielposition zu einer Vielzahl der vorbestimmten Messzeitpunkten mit hinreichender Genauigkeit zu ermitteln, so können vorteilhafterweise Abweichungen von einer angenommenen, unbeschleunigten, geradlinigen Zielbewegung toleriert werden.

Gemäß einer weiteren bevorzugten Ausführungsform der Erfindung enthält das erfindungsgemäße Verfahren Entscheidungsmittel, um festzulegen, ob eine ermittelte Zielposition für das Korrigieren von systematischen Peilfehlern herangezogen wird. Dabei kann das Festlegen manuell durch Bedienereingriff oder automatisch erfolgen. Das hat den Vorteil, dass eine ermittelte Zielposition, die offensichtlich abweichend von der tatsächlichen Position geschätzt wurde, von dem Verfahren zum Korrigieren ausgenommen werden kann, um einen zusätzlichen Fehlerbeitrag zu vermeiden.

Weitere vorteilhafte Ausführungsformen der Erfindung ergeben sich aus den Unteransprüchen sowie aus den anhand der anliegenden Zeichnung näher erläuterten Ausführungsbeispielen. In der Zeichnung zeigen:

Fig. 1    ein Blockschaltbild zur Erläuterung des erfindungsgemäßen Verfahrens,
Fig. 2    ein Histogramm von Peilungsresiduen über sensorbezogener Peilung und
Fig. 3    eine Darstellung der ermittelten Peilungskorrekturwerte.

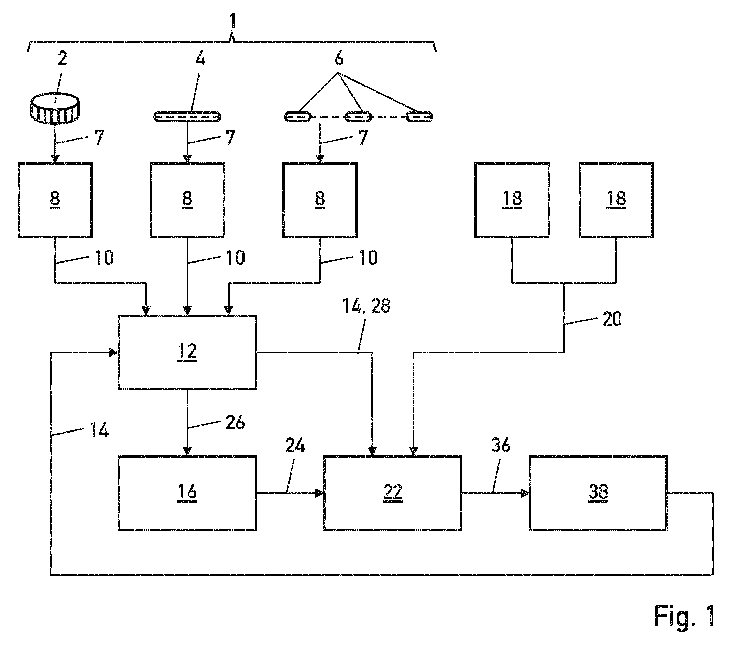

Fig. 1 zeigt ein Blockschaltbild zur Erläuterung des Verfahrens zum Korrigieren systematischer Peilfehler einer akustischen Peilanlage zur Peilung von schallabstrahlenden, d.h. schallerzeugenden oder schallreflektierenden, Zielen. Die nachfolgenden Erläuterungen beziehen sich auf ein Unterwasserfahrzeug, insbesondere ein U-Boot. Sie sind jedoch auch auf andere Unter- oder Überwasserfahrzeuge anwendbar.

Zum Detektieren und Orten schallabstrahlender Ziele befinden sich auf dem U-Boot mehrere Empfangsantennen 1, die für den Empfang von Schallwellen in unterschiedlichen Frequenzbereichen optimal ausgelegt sind.

Bei einer Peilanlage mit einer Zylinderbasis 2 werden bspw. breitbandige Fahrgeräusche eines Wasserfahrzeugs ausgewertet. Eine Seitenantenne 4, ein sog. Flank-Array, die für einen tieferen Frequenzbereich als die Zylinderbasis 2 ausgelegt ist, ist auf beiden Längsseiten des U-Boots angeordnet. Eine Antennenanordnung 6, ein sog. Passive Ranging Sonar (PRS), bei der die drei Sensoren im vorgegebenem Abstand zueinander längs einer Linie an der Seite des U-Bootes angeordnet sind, empfängt Schallwellen aus dem Mittleren- und Nahbereich. Dieses ist jedoch lediglich eine kleine Auswahl an Empfangsantennen 1. Die Erfindung ist nicht auf diese Empfangsantennen 2, 4, 6 beschränkt. Vielmehr ist das Verfahren bzw. die Vorrichtung zum Korrigieren systematischer Peilfehler mit einer beliebigen Anzahl beliebiger Empfangsantennen 1 durchführbar.

Diese vorstehend genannten Empfangsantennen 2, 4, 6 der Peilanlage weisen eine Vielzahl von elektroakustischen und/oder optoakustischen Wandlern zum Empfangen von Schallwellen und Erzeugen von Empfangssignalen 7 auf. Diese Wandler sind mit einer Signalverarbeitungseinrichtung 8 je Empfangsantenne 1 verbunden, welche anhand der Empfangssignale 7 der Wandler Peilungen von Zielen bestimmt. Dazu weisen die Signalverarbeitungseinrichtungen 8 jeweils einen Richtungsbildner zum Bilden von Richtcharakteristiken auf, die in vorgebbare Hauptempfangsrichtungen der zugehörigen Empfangsantenne 1 weisen. Die Empfangssignale 7 der Wandler werden durch Verwendung von Zeitverzögerungskoeffizienten derart verzögert, dass sie in einer zur Einfallsrichtung des Schalls rechtwinkligen Bezugsebene konphas sind. Diese Einfallswinkel der Schallwellen werden dabei gegen die Normale der Empfangsantenne 1 gemessen und als sensorbezogene Peilwinkel 10 ausgegeben.

Da bei der Ermittlung der Zeitverzögerungskoeffizienten von der Annahme ausgegangen wird, dass die Wandler der Empfangsantenne 1 im freien Raum in idealer Weise aufgebaut sind, weisen die sensorbezogenen Peilwinkel 10 unvermeidliche Peilfehler auf, die mittels eines der Signalverarbeitungseinrichtung 8 nachgeschalteten Korrekturmoduls 12 korrigiert werden. Das Korrekturmodul 12 weist Mittel zum Korrigieren sensorbezogener Peilwinkel 10 um einen Fehler auf, wobei sich dieser Peilfehler aus der Installation der Empfangsantenne 1 ergibt und in einer Funktionsprüfung ermittelt werden kann. Die Funktionsprüfung umfasst bspw. ein empirisches Peilen von Zielen, wobei diese Ziele in bekannten, um äquidistanten Winkelschritten, z.B. 1 Grad, geschwenkten Peilrichtungen gegenüber der ortsfesten Empfangsantenne 1 liegen.

Zum Korrigieren derartiger Peilfehler werden die Peilfehler je Empfangsantenne 1 mittels der Funktionsprüfung bestimmt und in einer sensorspezifischen Korrekturtabelle 14 abgelegt. In dem Korrekturmodul 12 werden die sensorbezogenen Peilwinkel 10 entsprechend der hinterlegten Korrekturtabellen 14 vorkorrigiert und über einen vorbestimmten Zeitraum gemittelt.

Wird für die Zielparameterbestimmung ein TMA-Verfahren (Targer Motion Analysis) eingesetzt, erfolgt die Mittelung vorzugsweise über einen TMA-Verarbeitungszyklus $C_k$, um die gemessenen und ggf. vorkorrigierten Peilwinkel einer TMA-Verarbeitungseinheit 16 zum Bestimmen von Zielparametern zu übergeben. Bei der Mittelung erhalten die gemessenen Peilwinkel 10 als Zeitstempel die gemittelte Zeit $t_k$ über einen TMA-Verarbeitungszyklus $C_k$.

Da sich die zu korrigierenden systematischen Peilfehler im Laufe der Zeit ändern können, reicht die vorstehend genannte Vorkorrektur der gemessenen Peilwinkel 10 auf Dauer nicht aus. Die gemessenen Peilwinkel 10 oder die vorkorrigierten Peilwinkel weichen dann von den tatsächlichen Winkeln zum Ziel um einen Peilfehler ab.

Unter den gemessenen Peilwinkeln 10 weisen Peilstrahlen einer Empfangsantenne 1 zu vorbestimmten Messzeitpunkten auf ein Ziel und werden von einer zu diesem Ziel angenommenen Zielbahn gekreuzt, wobei die Schnittpunkte ermittelten Zielpositionen zu den vorbestimmten Messzeitpunkten entsprechen. Die Zielbahn wird anhand von zuvor ermittelten kinematischen Zielparametern des Zieles festgelegt. Der zu korrigierende systematische Peilfehler beschreibt die Abweichung des zu einem vorbestimmten Messzeitpunkt gemessenen Peilwinkels 10 oder vorkorrigierten Peilwinkels und des zu der ermittelten Zielposition zugehörigen Peilwinkels zu diesem vorbestimmten Messzeitpunkt und lässt sich durch Berechnung von Peilungsresiduen

$$\Delta\alpha(t_i) = \alpha^m(t_i) - \alpha(\mathbf{X}_T(t'); t_i)$$

ermitteln, wobei $\alpha^m(t_i)$ der gemessene oder vorkorrigierte Peilwinkel zum Zeitpunkt $t_i$ und $\alpha(\mathbf{X}_T(t');t_i)$ der erwartete Peilwinkel zum Zeitpunkt $t_i$ ist, wenn $(\mathbf{X}_T(t');t_i)$ der gegebene Zielzustand ist, welcher sich aus den kinematischen Zielparametern $\mathbf{X}_T(t') = [X_T(t'), Y_T(t'), \dot{x}_T, \dot{y}_T]^T$ mit $X_T(t'), Y_T(t')$ entsprechend einer Zielposition und $\dot{x}_T, \dot{y}_T$ als Zielgeschwindigkeitskomponenten zu einem festen Referenzzeitpunkt $t'$ ergibt.

Da diese Peilungsresiduen neben einem Rauschanteil den systematischen Peilfehler darstellen, lässt sich dieser Peilfehler bei einer hinreichend großen Menge an Peilungsresiduen über sensorbezogene Peilwinkel für alle auftretenden Empfangsrichtungen mit guter Genauigkeit bestimmen.

Gemäß dem erfindungsgemäßen Verfahren lässt sich die Zielposition mittels nicht-akustischer Sensoren 18 oder mittels eines von einer TMA-Verarbeitungseinheit 16 ausgeführten TMA-Verfahrens bestimmen. In Abhängigkeit der vorhandenen Sensoren 18 bzw. Empfangsantennen 1 werden verschiedene Fälle unterschieden: ein Ziel wird von akustischen und nicht-akustischen Sensoren 18 erkannt oder ein Ziel wird nur von akustischen Sensoren bzw. Empfangsantennen 1 erkannt. Im ersten Fall können die kinematischen Zielparameter, wie Kurs, Geschwindigkeit und Entfernung des Zieles, der nicht-akustischen Sensoren 18 als Referenzdaten verwendet werden, um eine genaue Zielposition des Zieles anzugeben. Im letzteren Fall werden die kinematischen Zielparameter mittels des TMA-Verfahrens geschätzt.

Liegen dem erfindungsgemäßen Verfahren Zieldaten aus Messungen nicht-akustischer Sensoren 18, wie Radar-Sensoren, oder AIS-Daten zugrunde, können die Korrekturtabelle 14 bzw. Korrekturtabellen 14 einer, mehrerer oder aller Empfangsantennen 1 erstellt oder aktualisiert werden. Anhand der vom nicht-akustischen Sensor 18 ermittelten Referenzzieldaten wird eine Zielposition $\hat{\mathbf{X}}_T(t')$ ermittelt, die annähernd der tatsächlichen Zielposition $\mathbf{X}_T(t')$ zum Zeitpunkt $t'$ entspricht.

Dazu werden die nicht-akustischen Sensordaten 20 einem Residuenmodul 22 übergeben. Um die Peilungsresiduen, d.h. die Abweichungen zwischen gemessenen Peilwinkeln 10 oder vorkorrigierten Peilwinkeln und den zu den ermittelten Zielpositionen zugehörigen Peilwinkeln, zu vorbestimmten Messzeitpunkten zu bestimmen, werden die nicht-akustischen Sensordaten 20 an die akustischen Daten der beteiligten Empfangsantennen 1 angepasst. Werden bspw. anhand der AIS-Daten ein Zielkurs und/oder eine Zielgeschwindigkeit ermittelt, werden diese Werte über Grund bestimmt, wohingegen die Eigenposition und die mittels des TMA-Verfahrens ermittelten Zielparameter relativ zu dem umgebenen Wasser ermittelt werden. Ferner besitzen elektromagnetische Wellen und akustische Wellen verschiedene Ausbreitungsgeschwindigkeiten, so dass die von Radar-Sensoren ermittelten Größen entsprechend umgewandelt werden.

Für den Fall, dass die nicht-akustischen Sensoren 18 zuverlässige Werte für die Zielposition, Zielkurs und Zielgeschwindigkeit liefern, ist ein einzelner Sensordatensatz 20 ausreichend, um die Peilungsresiduen zu den vorbestimmten Messzeitpunkten zu ermitteln.

Für den Fall, dass eine kontinuierliche Messreihe nicht-akustischer Sensordaten 20 vorliegt, wird durch eine Glättung dieser Sensordaten 20 und/oder einer Interpolation auf die vorbestimmten Messzeitpunkte der akustischen Daten wenigstens einer zu korrigierenden Empfangsantenne 1 eine höhere Genauigkeit bei der Ermittlung der Peilungsresiduen erzielt, da evtl. durch Rauschen auftretende Fehler verringert werden.

Liegen dem erfindungsgemäßen Verfahren Zieldaten vor, die mittels eines Verfahrens zum Bestimmen von Zielparametern, insbesondere eines TMA-Verfahrens, ermittelt wurden, so werden die Peilungsresiduen 24 je einer Empfangsantenne 1 von der TMA-Verarbeitungseinheit 16 dem Residuenmodul 22 übergeben. Dabei obliegt es dem Bediener zu entscheiden, ob diese Peilungsresiduen 24 des letzten TMA-Durchlaufes für die Ermittlung bzw. Aktualisierung der Korrekturtabelle 14 herangezogen werden. So kann eine offensichtlich falsche TMA-Lösung ausgelassen werden, wodurch die Peilungskorrekturwerte der Korrekturtabellen 14 nicht verfälscht werden.

Im Rahmen der TMA-Darstellung lassen sich die Peilungsresiduen 24 für ausgewählte Empfangsantennen 1 in einem Diagramm anzeigen. Wird das Ziel von mehreren Empfangsantennen 1 erfasst und sind die zu erwartenden Peilfehler derjenigen Empfangsantenne 1, dessen Korrekturtabelle 14 aktualisiert werden soll nicht so stark, dass diese Empfangsantenne 1 von der TMA-Berechnung ausgeschlossen wird, dann kann der Bediener sich die zu interessierenden Peilungsresiduen 24 in der TMA-Darstellung anzeigen lassen.

Für den Fall, dass die akustische Peilanlage über eine fehlerfreie Empfangsantenne 1 verfügt, werden die über einen TMA-Verarbeitungszyklus gemittelten Peilwinkel 26 dieser Empfangsantenne 1 für die TMA-Berechnung verwendet. Nach einem erfolgreichen TMA-Durchlauf, mit einer konvergierenden TMA-Lösung, werden die zu dieser Lösung bzw. geschätzten Zielposition $\hat{X}_T(t')$ zugehörigen Peilungsresiduen 24 dem Residuenmodul 22 übergeben. Anhand dieser Peilungsresiduen 24 können die Korrekturtabellen 14 aller beteiligten Empfangsantennen 1 aktualisiert werden.

Für den Fall, dass möglicherweise alle Empfangsantennen 1 einen systematischen Peilfehler aufweisen, werden die gemessenen und evtl. vorkorrigierten Peilwinkel derjenigen Empfangsantennen 1 für die TMA-Berechnung herangezogen, deren Korrekturtabelle 14 die größte Datenbasis aufweist. Die Auswahl der für die TMA-Berechnung verwendeten Empfangsantennen 1 erfolgt bevorzugt über das Korrekturmodul 12, indem entsprechende Gewichtsfaktoren bei der Mittelung der gemessenen Peilwinkel verwendet werden. Die Gewichtsfaktoren sind jedoch keine feststehenden Werte. Sie können für jede Mittelung über einen TMA-Verarbeitungszyklus $C_k$ neu gewählt werden. Die ggf. gewichteten und gemittelten Peilwinkel 26 werden der TMA-Verarbeitungseinheit 16 übergeben.

Vorzugsweise wird eine Empfangsantenne 1 bestimmt, deren Korrekturtabelle 14 aktualisiert werden soll. Die gemessenen Peilwinkel 10 dieser Empfangsantenne 1 werden dann bei der TMA-Berechnung nicht berücksichtigt.

Weisen alle Empfangsantennen 1 einen systematischen Fehler auf, ist es notwendig, viele verschiedene Messszenarien mit möglichst großen variierenden Geometrien in den beteiligten Empfangsantennen 1 durchzuführen, um eine genaue Korrekturtabelle 14 zu erzeugen. Es ist jedoch möglich, dass die Fehler der verschiedenen Empfangsantennen 1 bei einer Multi-Sensor-TMA-Berechnung kompensiert werden, wenn ein Ziel von mehreren Empfangsantennen 1 erkannt wird, wobei die Empfangsantennen 1 verschiedene systematische Fehler aufweisen.

Die Berechnung der Peilungsresiduen 24 in der TMA-Verarbeitungseinheit 16 erfolgt anhand einer Schätzung $\hat{X}_T(t')$ für die tatsächliche Zielposition $X_T(t')$. Obwohl die TMA-Lösungen systematische Fehler aufgrund der systematischen Peilfehler der beteiligten Empfangsantennen 1 aufweisen, führen die verschiedenen Geometrien dieser Empfangsantennen 1 zu wesentlich besseren Peilungskorrekturwerten der jeweiligen Korrekturtabelle 14. Dazu werden die Peilungsresiduen 24 nach einem erfolgreichen TMA-Durchlauf dem Residuenmodul 22 übergeben.

Werden für die Ermittlung der Peilungsresiduen 24 bereits vorkorrigierte Peilwinkel herangezogen, dann handelt es sich bei den ermittelten Abweichungen um Restfehler. Zur Bestimmung des sensorspezifischen systematischen Peilfehlers werden als Daten 28 die vorhandenen Peilungskorrekturwerte der Korrekturtabelle 14 mit denen der gemessene Peilwinkel 10 vorkorrigiert wurde sowie der gemessene, unkorrigierte Peilwinkel 10 für die Ermittlung des systematischen Peilfehlers berücksichtigt.

Die Peilungsresiduen 24 werden in dem Residuenmodul 22 gesammelt und es wird über sensorbezogener Peilung eine Häufigkeitsverteilung erstellt. Als Ausführungsbeispiel wird das erfindungsgemäße Verfahren anhand einer Zylinderbasis 2 als Empfangsantenne 1 näher erläutert. Es lassen sich mit diesem Verfahren jedoch jedwede sonstige Empfangsantennen korrigieren.

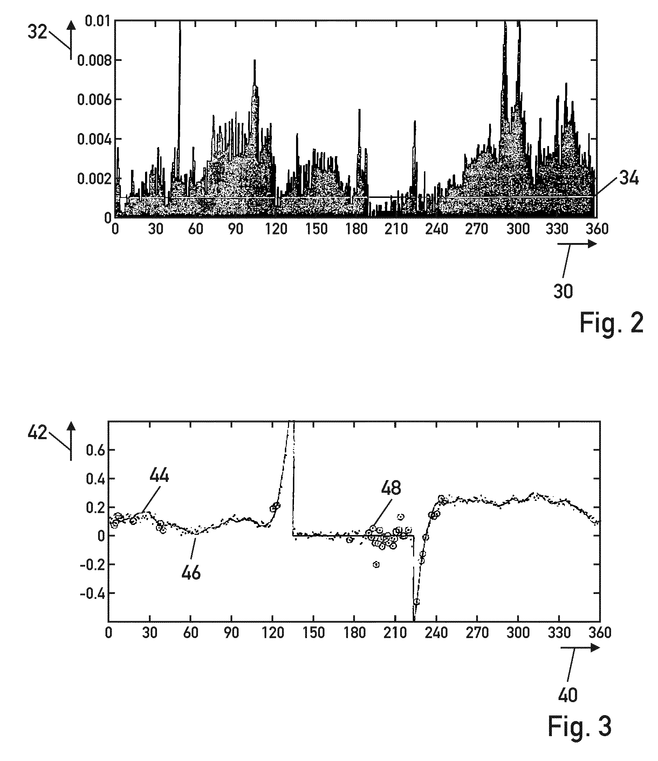

Fig. 2 zeigt ein Histogramm von Peilungsresiduen 24 über sensorbezogener Peilung. Es handelt sich hierbei um die endgültigen Werte der Peilungsresiduen 24, die aus den bisher gesammelten Peilungskorrekturwerten und den unkorrigierten Peilwinkeln 10 ermittelt wurden und nicht um den Restfehler.

Dargestellt ist auf der horizontalen Achse 30 der Empfangsbereich einer Zylinderbasis 2 von 0 bis 360 Grad. Über der vertikalen Achse 32 sind die relativen Häufigkeiten der auftretenden Peilwinkel aufgetragen, d.h. wie viele ermittelte Peilungsresiduen 24 pro Peilwinkel vorliegen. Ein vorbestimmter Schwellenwert 34 gibt an, ob eine hinreichend große Datenmenge vorhanden ist.

Bevorzugt wird für das Erzeugen des Histogramms eine Tabelle angelegt mit einer Spalteneinteilung in 1 Grad Schritten des Empfangsbereiches der Empfangsantenne 1. In eine Zelle wird der Wert des zuvor ermittelten Peilungsresiduums abgelegt, wobei die zugehörige Zelle durch den gemittelten Peilwinkel 26 angegeben wird. Erreicht die Anzahl der Einträge in einer Spalte bzw. für einen gemittelten Peilwinkel 26 der Empfangsantenne 1 den vorbestimmten Schwellenwert 34, werden die Peilungsresiduen 24 dieser Spalte gemittelt und die Einträge in den Zellen dieser Spalte gelöscht.

Ein derartiges Histogramm bzw. eine derartige Häufigkeitsverteilung über sensorbezogener Peilung wird für jede zu korrigierende Empfangsantenne 1 über mehrere Messszenarien erstellt. In einem Messszenario treten üblicherweise nur eine Teilmenge der möglichen sensorbezogenen Peilwinkel auf. Vorzugsweise werden von dem Trägerfahrzeug Eigenmanöver gewählt, bei denen sich das Ziel in einem guten Peilsektor befindet. Somit ergibt sich gemäß Fig. 2 eine hinreichende Häufigkeit innerhalb eines guten Peilsektors der Zylinderbasis 2, wodurch sich hier anschließend die genausten Peilungskorrekturwerte ergeben. Um jedoch den gesamten Empfangsbereich der Empfangsantenne 1 zu erfassen, sind mehrere TMA-Durchläufe verschiedener Messszenarien notwendig.

Sind in der Häufigkeitsverteilung gemäß Fig. 2 pro Einfallsrichtung oder Peilung hinreichend viele Werte für die Peilungsresiduen 24 enthalten, d.h. wird der vorbestimmte Schwellenwert 34 überschritten, werden diese Werte über die Peilung gemittelt und als gemittelte Peilungsresiduen 36 pro Einfallsrichtung einer Peilungskorrekturwerterfassungseinheit 38, wie in Fig. 1 dargestellt, übergeben. Dadurch werden mögliche Fehler, die bei der Schätzung der TMA-Lösung auftreten können herausgemittelt.

Fig. 3 zeigt die Peilungskorrekturwerte einer Zylinderbasis 2. Dabei liegt dieser Darstellung die Häufigkeitsverteilung von Fig. 2 zugrunde. Auf einer horizontalen Achse 40 ist der Empfangsbereich der Zylinderbasis 2 von 0 bis 360 Grad dargestellt. Über der vertikalen Achse 42 sind die systematischen Peilfehler bzw. Peilungskorrekturwerte der auftretenden Peilwinkel in Grad aufgetragen. Die durchgezogene Linie 44 zeigt den, z.B. experimentell ermittelten, tatsächlichen Verlauf des systematischen Peilfehlers auf, wobei für den rückwärtigen Sektor der Empfangsantenne 2 von etwa 135 Grad bis 225 Grad keine Werte vorliegen. Die auf der Basis der Häufigkeitsverteilung aus Fig. 2 ermittelten Peilungskorrekturwerte sind als Punkte 46 in dem Diagramm dargestellt. Diejenigen Peilungskorrekturwerte, für die nicht genügend Werte gemäß der Häufigkeitsverteilung von Fig. 2 vorliegen, sind mit einem zusätzlichen Kreis 48 hervorgehoben.

Die Peilungskorrekturwerterfassungseinheit 38 erstellt anhand der gemittelten Peilungsresiduen 36 eine Korrekturtabelle 14 oder aktualisiert eine vorhandene Korrekturtabelle 14, wobei die mit einem Kreis versehenen Peilungskorrekturwerte 48 nicht berücksichtigt werden. Die Aktualisierung erfolgt bevorzugt gemäß:

$$Peilungskorrekturwert_{neu}(\alpha_i) = \lambda_i \; Peilungskorrekturwert_{alt}(\alpha_i) + (1 - \lambda_i)\langle \Delta\alpha_i \rangle$$

wobei $\langle\Delta\alpha_i\rangle$ die gemittelten Peilungsresiduen 36 für die Einfallsrichtung $\alpha_i$ und $\lambda_i$ ein Gewichtsfaktor für diese Einfalls-richtung ist. Diese Gewichtsfaktoren $\lambda_i$ bestimmen den Einfluss der gemittelten Peilungsresiduen 36 auf diese Aktualisierung und sind somit ein Maß dafür, wie verlässlich die vorhandenen Peilungskorrekturwerte sind. Es können für $\lambda_i$ feste Werte gewählt werden, oder aber ein Wert in Abhängigkeit der bereits vorhandenen Peilungskorrekturwerte. Der Gewichtsfaktor $\lambda_i$ kann jedoch auch nach jeder Aktualisierung neu bestimmt werden unter Berücksichtigung des arithmetischen Mittelwertes aller auftretenden Peilungsresiduen 24 für die zugehörige Peilung. Somit erlangt eine einzelne Aktualisierung der Korrekturtabelle 14 einen geringeren Einfluss pro Einfallsrichtung, je mehr Peilungskorrekturwerte bereits vorliegen.

Bevorzugt wird bei der Mittelung der Peilungsresiduen 36 eine Glättung der Werte vorgenommen, da sich der systematische Peilfehler über benachbarte Einfallsrichtungen nicht sprunghaft ändert. Der Peilungskorrekturwert wird ermittelt unter Berücksichtigung der Peilungskorrekturwerte der benachbarten Peilrichtungen von beiden Seiten sowie einem Parameter zur Gewichtung. Auf diese Weise lassen sich Fluktuationen in der Korrekturtabelle 14 reduzieren.

Zu jeder Einfallsrichtung $\alpha_i$ werden zwei Werte in der Korrekturtabelle 14 hinterlegt. Zum Einen der Peilungskorrekturwert, welcher anhand des zu dieser Einfallsrichtung $\alpha_i$ zugehörigen gemittelten Peilungsresiduums 36 bestimmt wird, und zum Anderen ein Wert für die Anzahl der Peilungsresiduen 24 im zugehörigen Histogramm aus denen das gemittelte Peilungsresiduum 36 hervorgeht.

Wird erneut ein Wert für das gemittelte Peilungsresiduum 36 dieser Einfallsrichtung $\alpha_i$ der Peilungskorrektur-werterfassungseinheit 38 übergeben, wird der Wert für die Anzahl der Peilungsresiduen 24 im zugehörigen Histogramm zu den ursprünglich unter dieser Einfallsrichtung $\alpha_i$ abgelegten Wert hinzuaddiert, so dass die Korrekturtabelle 14 stets einen Wert für die gesamte Anzahl der beteiligten Peilungsresiduen 24 enthält.

Diejenigen Peilungsresiduen 24 in dem Histogramm, die für die Aktualisierung verwendet wurden, werden gelöscht. Die Spalten, die aufgrund einer zu geringen Datenbasis bei der Aktualisierung nicht berücksichtigt wurden, werden in weiteren Iterationsschritten gefüllt.

Die Korrekturtabelle 14 einer Empfangsantenne 1 wird jedoch nicht in einem einzelnen Schritt erstellt bzw. aktualisiert. Vielmehr wird diese Korrekturtabelle 14 im Verlauf vieler unterschiedlicher Messszenarien, also mittels eines iterativen Verfahrens, mit der Zeit mit Peilungskorrekturwerten gefüllt.

Die auf diese Weise aktualisierten bzw. neu erstellten Korrekturtabellen 14 für die einzelnen Empfangsantennen 1 werden dem Korrekturmodul 12 zum Vorkorrigieren der gemessenen Peilwinkel 10 und dem Residuenmodul 22 zum Bestimmen der Peilungsresiduen 24, übergeben.

Bevorzugt werden die aktualisierten Korrekturtabellen 14 der einzelnen Empfangsantennen 1 fest in einem Datenspeicher hinterlegt, so dass nach einem erneuten Systemstart die Peilungskorrekturwerte in den Korrekturtabellen 14 erhalten bleiben.

Mit dem erfindungsgemäßen Verfahren ist eine Online-Bestimmung von sensorspezifischen Korrekturtabellen 14 für die beteiligten Empfangsantennen 1 im laufenden Betrieb, insbesondere aus den mittels des TMA-Verfahrens bestimmten Peilungsresiduen 24, möglich, wobei die Peilungskorrekturwerte regelmäßig in aufeinander folgenden Messszenarien verbessert werden. Nach jedem erfolgreichen TMA-Durchlauf, bei dem die TMA-Lösung konvergiert, wird das Verfahren zum Korrigieren der systematischen Peilfehler durchgeführt.

Alle in der vorgenannten Figurenbeschreibung, in den Ansprüchen und in der Beschreibungseinleitung genannten Merkmale sind sowohl einzeln als auch in beliebiger Kombination miteinander einsetzbar. Die Offenbarung der Erfindung ist somit nicht auf die beschriebenen bzw. beanspruchten Merkmalskombinationen beschränkt. Vielmehr sind alle Merkmalskombinationen als offenbart zu betrachten.

**Patentansprüche**

1. Verfahren zum Korrigieren systematischer Peilfehler einer akustischen Peilanlage, insbesondere einer Sonaranlage, mit wenigstens einer Empfangsantenne (1) mit entweder einer Vielzahl von elektroakustischen oder optoakustischen Wandlern oder einer Vielzahl von elektroakustischen und optoakustischen Wandlern zum richtungsselektiven Empfangen von Schallwellen und Erzeugen von Empfangssignalen (7), bei dem die Empfangssignale (7) einer, mehrerer oder aller Empfangsantennen (1) jeweils einer Signalverarbeitung (8) unterzogen werden und die Signalverarbeitung (8) Zielen zugeordnete gemessene Peilwinkel (10) ermittelt, wobei diese Peilwinkel (10) bei Vorliegen einer der Empfangsantenne (1) zugeordneten Korrekturtabelle (14) vorkorrigiert werden,

   **dadurch gekennzeichnet, dass**
   zu vorbestimmten Messzeitpunkten eine Zielposition des Zieles ermittelt wird, wenigstens eine Abweichung (24) zwischen dem gemessenen Peilwinkel (10) oder dem vorkorrigierten Peilwinkel und einem zu der ermittelten Zielposition zugehörigen Peilwinkel zu wenigstens einem vorbestimmten Messzeitpunkt ermittelt wird,
   für eine, mehrere oder alle Empfangsantennen (1) die jeweilige Korrekturtabelle (14) zum Vorkorrigieren der gemessenen Peilwinkel (10) anhand der zur jeweiligen Empfangsantenne (1) ermittelten Abweichungen (24) erstellt oder aktualisiert wird und
   die systematischen Peilfehler je gemessenem Peilwinkel (10) einer, mehrerer oder aller Empfangsantennen (1) entsprechend zugehöriger Peilungskorrekturwerte der Korrekturtabelle (14) korrigiert werden.

2. Verfahren nach Anspruch 1,
   **dadurch gekennzeichnet, dass**
   die Korrekturtabelle (14) einer, mehrerer oder aller Empfangsantennen (1) zu Beginn des Verfahrens mit Nullen als Peilungskorrekturwerte oder mit mittels einer Funktionsprüfung der zugehörigen Empfangsantenne (1) ermittelten Peilungskorrekturwerte gefüllt werden und
   im Laufe des Verfahrens die Korrekturtabelle (14) zum Vorkorrigieren der Peilwinkel einer, mehrerer oder aller Empfangsantennen (1) mindestens einmal aktualisiert wird, wobei aktuelle Peilungskorrekturwerte anhand der bereits vorhandenen Peilungskorrekturwerte, der ermittelten Abweichungen (24) und der gemessenen, unkorrigierten Peilwinkel (10) ermittelt werden.

3. Verfahren nach Anspruch 1 oder 2,
   **dadurch gekennzeichnet, dass**
   die ermittelte Zielposition des Zieles mittels eines Verfahrens zum Bestimmen von Zielparametern (16), insbesondere Target-Motion-Analysis-Verfahren, geschätzt und/oder mittels nicht-akustischer Sensoren (18), insbesondere Radar-Sensoren, und/oder Automatic-Identification-System-Daten ermittelt wird.

4. Verfahren nach einem der vorhergehenden Ansprüche,
**dadurch gekennzeichnet, dass**
eine Häufigkeitsverteilung über sensorbezogener Peilung der ermittelten Abweichungen (24) zwischen den gemessenen Peilwinkeln (10) oder den vorkorrigierten Peilwinkeln und den zu den ermittelten Zielpositionen zugehörigen Peilwinkeln je Empfangsantenne (1) erstellt wird und die ermittelten Abweichungen (24) zu jeder sensorbezogenen Peilung gemittelt werden.

5. Verfahren nach Anspruch 4,
**dadurch gekennzeichnet, dass**
eine Glättung bei der Mittelung der ermittelten Abweichungen (24) über benachbarte, sensorbezogene Peilwinkel durchgeführt wird.

6. Verfahren nach einem der vorhergehenden Ansprüche,
**dadurch gekennzeichnet, dass**
die Aktualisierung der Korrekturtabelle (14) unter Verwendung von Gewichtsfaktoren für die Peilwinkel durchgeführt wird.

7. Verfahren nach einem der vorhergehenden Ansprüche,
**dadurch gekennzeichnet, dass**
die Aktualisierung der Korrekturtabelle (14) für diejenigen Peilwinkel durchgeführt wird, deren Anzahl an ermittelten Abweichungen (24) einen vorbestimmten Schwellenwert (34) überschritten hat.

8. Verfahren nach einem der vorhergehenden Ansprüche,
**dadurch gekennzeichnet, dass** bei der Ermittlung der Zielposition mittels nicht-akustischer Sensoren (18), insbesondere Radar-Sensoren, und/oder Automatic-Identification-System-Daten bei Vorliegen einer kontinuierlichen Messreihe eine Glättung von Messdaten dieser Messreihe und/oder eine Interpolation auf die vorbestimmten Messzeitpunkte durchgeführt wird.

9. Vorrichtung zur Korrektur von systematischen Peilfehlern einer akustischen Peilanlage, insbesondere einer Sonaranlage, mit wenigstens einer Empfangsantenne (1) mit entweder einer Vielzahl von elektroakustischen oder optoakustischen Wandlern oder einer Vielzahl von elektroakustischen und optoakustischen Wandlern zum richtungsselektiven Empfangen von Schallwellen und Erzeugen von Empfangssignalen (7), wobei die Empfangssignale (7) einer, mehrerer oder aller Empfangsantennen (1) einer Signalverarbeitung (8) unterziehbar sind und von der Signalverarbeitung (8) zu Zielen zugeordnete gemessene Peilwinkel (10) ermittelbar sind, und wobei diese Peilwinkel (10) bei Vorliegen einer der Empfangsantenne (1) zugeordneten Korrekturtabelle (14) vorkorrigierbar sind,
**gekennzeichnet durch**
Mittel zum Ermitteln einer Zielposition eines Zieles zu vorbestimmten Messzeitpunkten,
ein Residuenmodul (22) zum Ermitteln wenigstens einer Abweichung (24) zwischen dem gemessenen Peilwinkel (10) oder dem vorkorrigierten Peilwinkel und einem zu der ermittelten Zielposition zugehörigen Peilwinkel zu wenigstens einem vorbestimmten Messzeitpunkt,
eine Peilungskorrekturwerterfassungseinheit (38), welche derart ausgestaltet ist, um für eine, mehrere oder alle Empfangsantennen (1) die Korrekturtabelle (14) zum Vorkorrigieren der gemessenen Peilwinkel (10) anhand der zur jeweiligen Empfangsantenne (1) ermittelten Abweichungen (24) zu erstellen oder zu aktualisieren und
ein Korrekturmodul (12) zum Korrigieren des systematischen Peilfehlers je gemessenen Peilwinkel (10) einer, mehrerer oder aller Empfangsantennen (1) entsprechend zugehöriger Peilungskorrekturwerte der Korrekturtabelle (14).

10. Vorrichtung nach Anspruch 9,
**dadurch gekennzeichnet, dass**
die Korrekturtabelle (14) einer, mehrerer oder aller Empfangsantennen (1) zu Beginn der Korrektur von systematischen Peilfehlern als Peilungskorrekturwerte Nullen oder mittels einer Funktionsprüfung der zugehörigen Empfangsantenne (1) ermittelte Peilungskorrekturwerte aufweist und
im Laufe der Korrektur von systematischen Peilfehlern die Korrekturtabelle (14) zum Vorkorrigieren der Peilwinkel einer, mehrerer oder aller Empfangsantennen (1) mindestens einmal aktualisierbar ist, wobei aktuelle Peilungskorrekturwerte anhand der bereits vorhandenen Peilungskorrekturwerte, der ermittelten Abweichungen (24) und der gemessenen, unkorrigierten Peilwinkel (10) ermittelbar sind.

**11.** Vorrichtung nach einem der Ansprüche 9 bis 10,
**gekennzeichnet durch**
dass eine Zielposition des Zieles **durch** wenigstens einen nicht-akustischen Sensor (18), insbesondere Radar-Sensor der Vorrichtung ermittelbar ist oder die Vorrichtung dazu ausgebildet ist eine Zielposition des Zieles auf Basis von Automatic-Identification-System-Daten zu ermitteln.

**12.** Vorrichtung nach einem der Ansprüche 9 bis 11,
**gekennzeichnet durch**
eine Ausgestaltung des Residuenmoduls (22) derart, um eine Häufigkeitsverteilung über sensorbezogene Peilung der ermittelten Abweichungen (24) zwischen den gemessenen Peilwinkeln (10) oder den vorkorrigierten Peilwinkeln und zu der angenommenen Zielposition ermittelten Peilwinkeln je Empfangsantenne (1) zu erstellen und die ermittelten Abweichungen (24) zu jeder sensorbezogener Peilung zu mitteln.

**13.** Vorrichtung nach einem der Ansprüche 9 bis 12,
**gekennzeichnet durch**
eine Ausgestaltung der Peilungskorrekturwerterfassungseinheit (38) derart, um die Aktualisierung der Korrekturtabelle (14) unter Verwendung von Gewichtsfaktoren für jeden Peilwinkel durchzuführen.

**14.** Vorrichtung nach einem der Ansprüche 9 bis 13,
**gekennzeichnet durch**
eine weitere Ausgestaltung der Peilungskorrekturwerterfassungseinheit (38) derart, um die Aktualisierung der Korrekturtabelle (14) für diejenigen Peilungswinkel durchzuführen, deren Anzahl an ermittelten Abweichungen (24) einen vorbestimmten Schwellenwert (34) überschritten hat.

**15.** Vorrichtung nach einem der Ansprüche 9 bis 14,
**gekennzeichnet durch**
eine weitere Ausgestaltung des nicht-akustischen Sensors (18), insbesondere Radar-Sensors, oder Automatic-Identification-System-Daten derart, um bei der Ermittlung der angenommenen Zielposition bei Vorliegen einer kontinuierlichen Messreihe eine Glättung von Messdaten dieser Messreihe oder eine Interpolation auf die vorbestimmten Messzeitpunkte durchzuführen.


**Claims**

**1.** Method for correcting systematic bearing errors of an acoustic bearing system, in particular of a sonar system, with at least one receiving antenna (1) with either a plurality of electroacoustic or optoacoustic transducers or a plurality of electroacoustic and optoacoustic transducers for the direction-selective reception of acoustic waves and production of receiving signals (7), in which the receiving signals (7) of one, several or all receiving antennas (1) are subjected respectively to a signal processing (8) and the signal processing (8) determines measured bearing angles (10) assigned to targets, wherein these bearing angles (10) are pre-corrected if a correction table (14) assigned to the receiving antenna (1) is present, **characterised by** that at predetermined measuring time points a target position of the target is determined, at least one deviation (24) between the measured bearing angle (10) or the pre-corrected bearing angle and a bearing angle associated to the determined target position is determined at at least one predetermined measuring time point, the respective correction table (14) for pre-correcting the measured bearing angles (10) is created or updated for one, several or all receiving antennas (1) with reference to the deviations (24) determined for the respective receiving antenna (1) and the systematic bearing errors per measured bearing angle (10) of one, several or all receiving antennas (1) are corrected according to associated bearing correction values of the correction table (14).

**2.** Method according to claim 1, **characterised by** that the correction table (14) of one, several or all receiving antennas (1) is filled at the start of the method with zeros as bearing correction values or with bearing correction values determined by means of a function test of the associated receiving antenna (1) and in the course of the method, the correction table (14) for pre-correcting the bearing angles of one, several or all receiving antennas (1) is updated at least once, wherein current bearing correction values are determined with reference to the bearing correction values already present, the deviations (24) determined and the measured, uncorrected bearing angles (10).

**3.** Method according to claim 1 or 2, **characterised by** that the determined target position of the target is estimated by means of a method for determining target parameters (16), in particular target-motion-analysis methods, and/or is determined by means of non-acoustic sensors (18), in particular radar sensors, and/or automatic identification system data.

4. Method according to one of the preceding claims, **characterised by** that a frequency distribution is produced by way of sensor-related direction finding of the determined deviations (24) between the measured bearing angles (10) or the pre-corrected bearing angles and the bearing angles associated to the determined target positions for each receiving antenna (1) and the deviations (24) determined are averaged for each sensor-related direction finding.

5. Method according to claim 4, **characterised by** that smoothing is carried out in the averaging of the deviations (24) determined via adjacent, sensor-related bearing angles.

6. Method according to one of the preceding claims, **characterised by** that the updating of the correction table (14) is carried out using weighting factors for the bearing angles.

7. Method according to one of the preceding claims, **characterised by** that the updating of the correction table (14) is carried out for those bearing angles of which the number of deviations (24) determined has exceeded a predetermined threshold (34).

8. Method according to one of the preceding claims, **characterised by** that, when determining the target position by means of non-acoustic sensors (18), in particular radar sensors, and/or automatic identification system data, in the event of a continuous measuring series existing, a smoothing of measured data of this measuring series and/or an interpolation at the predetermined measuring time points is carried out.

9. Device for the correction of systematic bearing errors of an acoustic bearing system, in particular of a sonar system, with at least one receiving antenna (1) with either a plurality of electroacoustic or optoacoustic transducers or a plurality of electroacoustic and optoacoustic transducers for the direction-selective reception of acoustic waves and production of receiving signals (7), wherein the receiving signals (7) of one, several or all receiving antennas (1) can be subjected to a signal processing (8) and measured bearing angles (10) assigned to targets can be determined by the signal processing (8), and wherein these bearing angles (10) can be pre-corrected if a correction table (14) assigned to the receiving antenna (1) is present, **characterised by** means for determining a target position of a target at predetermined measuring time points, a residual module (22) for determining at least one deviation (24) between the measured bearing angle (10) or the pre-corrected bearing angle and a bearing angle associated to the determined target position at at least one predetermined measuring time point, a bearing correction value acquisition unit (38), which is configured in such a way as to create or update for one, several or all receiving antennas (1) the correction table (14) for pre-correcting the measured bearing angles (10) with reference to the deviations (24) determined for the respective receiving antenna (1) and a correction module (12) for correcting the systematic bearing error per measured bearing angle (10) of one, several or all receiving antennas (1) according to associated bearing correction values of the correction table (14).

10. Device according to claim 9, **characterised by** that the correction table (14) of one, several or all receiving antennas (1) has zeros or bearing correction values determined by a function test of the associated receiving antenna (1) as bearing correction values at the start of correction of systematic bearing errors and in the course of the correction of systematic bearing errors, the correction table (14) for pre-correcting the bearing angles of one, several or all receiving antennas (1) can be updated at least once, wherein current bearing correction values can be determined with reference to the bearing correction values already present, the determined deviations (24) and the measured, uncorrected bearing angles (10).

11. Device according to one of claims 9 to 10, **characterised by** that a target position of the target can be determined by at least one non-acoustic sensor (18), in particular a radar sensor of the device, or the device is formed to determine a target position of the target on the basis of automatic identification system data.

12. Device according to one of claims 9 to 11, **characterised by** a configuration of the residual module (22) in such a way as to produce a frequency distribution by way of sensor-related direction finding of the determined deviations (24) between the measured bearing angles (10) or the pre-corrected bearing angles and bearing angles determined for the assumed target position for each receiving antenna (1) and to average the determined deviations (24) for each sensor-related direction finding.

13. Device according to one of claims 9 to 12, **characterised by** a configuration of the bearing correction value acquisition unit (38) in such a way as to carry out the updating of the correction table (14) using weighting factors for each bearing angle.

14. Device according to one of claims 9 to 13, **characterised by** another configuration of the bearing correction value acquisition unit (38) in such a way as to carry out the updating of the correction table (14) for those bearing angles of which the number of determined deviations (24) has exceeded a predetermined threshold (34).

15. Device according to one of claims 9 to 14, **characterised by** another configuration of the non-acoustic sensor (18), in particular of the radar sensor, or automatic identification system data in such a way as to carry out, when determining the assumed target position with the presence of a continuous measuring series, a smoothing of measured data of this measuring series or an interpolation at the predetermined measuring time points.

**Revendications**

1. Procédé de correction d'erreurs de relèvement systématiques d'un équipement de relèvement acoustique, notamment d'un sonar, présentant au moins une antenne de réception (1) comportant soit une pluralité de convertisseurs électroacoustiques ou optoacoustiques, soit une pluralité de convertisseurs électroacoustiques et optoacoustiques permettant de recevoir des ondes sonores de manière sélective du point de vue de leur orientation et de produire des signaux de réception (7), dans lequel lesdits signaux de réception (7) d'une, de plusieurs ou de toutes les antennes de réception (1) sont respectivement soumis à un traitement de signaux (8) et ledit traitement de signaux (8) détermine des angles de relèvement mesurés (10) affectés à des objectifs, ces angles de relèvement (10) étant précorrigés en présence d'un tableau de correction (14) affecté à l'antenne de réception (1),
**caractérisé en ce que**
à des instants de mesure prédéterminés, on détermine une position cible de l'objectif, on détermine au moins un écart (24) entre l'angle de relèvement mesuré (10) ou l'angle de relèvement précorrigé et un angle de relèvement appartenant à la position cible déterminée à au moins un instant de mesure prédéterminé,
pour une, plusieurs ou toutes les antennes de réception (1), on élabore ou on actualise le tableau de correction (14) respectif destiné à la précorrection des angles de relèvement mesurés (10) au moyen des écarts déterminés (24) pour l'antenne de réception (1) respective, et
on corrige les erreurs de relèvement systématiques pour chaque angle de relèvement mesuré (10) d'une, de plusieurs ou de toutes les antennes de réception (1) en fonction de valeurs de correction de relèvement connexes issues du tableau de correction (14).

2. Procédé selon la revendication 1,
**caractérisé en ce que**
le tableau de correction (14) d'une, de plusieurs ou de toutes les antennes de réception (1), au début du procédé, est rempli par des zéros pour les valeurs de correction de relèvement ou par des valeurs de correction de relèvement déterminées au moyen d'un essai fonctionnel de l'antenne de réception (1) connexe, et
au cours du procédé, on actualise au moins une fois le tableau de correction (14) destiné à la précorrection des angles de relèvement d'une, de plusieurs ou de toutes les antennes de réception (1), moyennant quoi des valeurs de correction de relèvement actuelles sont déterminées au moyen des valeurs de correction de relèvement déjà existantes, des écarts déterminés (24) et des angles de relèvement mesurés (10) non corrigés.

3. Procédé selon la revendication 1 ou 2,
**caractérisé en ce que**
la position cible déterminée de l'objectif est estimée au moyen d'un procédé permettant de définir les paramètres cibles (16), notamment un procédé de trajectographie passive et/ou est déterminée à l'aide de capteurs non acoustiques (18), notamment de capteurs radar et/ou de données du Système d'identification automatique.

4. Procédé selon l'une quelconque des revendications précédentes,
**caractérisé en ce que**
une distribution de fréquences est élaborée pour chaque antenne de réception (1) par relèvement, spécifique aux capteurs, des écarts déterminés (24) entre les angles de relèvement mesurés (10) ou les angles de relèvement précorrigés et les angles de relèvement appartenant aux positions cibles à déterminer, et la moyenne des écarts déterminés (24) est établie à chaque relèvement spécifique aux capteurs.

5. Procédé selon la revendication 4,

**caractérisé en ce que**
un lissage est effectué lors de la moyennation des écarts déterminés (24) sur des angles de relèvement voisins fondés sur les capteurs.

6.  Procédé selon l'une quelconque des revendications précédentes,
**caractérisé en ce que**
l'actualisation du tableau de correction (14) s'effectue en faisant appel à des coefficients de pondération pour les angles de relèvement.

7.  Procédé selon l'une quelconque des revendications précédentes,
**caractérisé en ce que**
l'actualisation du tableau de correction (14) est réalisée pour les angles de relèvement dont le nombre d'écarts déterminés (24) a dépassé une valeur seuil prédéterminée (34).

8.  Procédé selon l'une quelconque des revendications précédentes,
**caractérisé en ce que,** lors de la détermination de la position cible au moyen de capteurs non acoustiques (18), notamment de capteurs radar et/ou de données du Système d'identification automatique, dans le cas de l'existence d'une série continue de mesures, on effectue un lissage des données de mesure de cette série de mesures et/ou une interpolation sur les instants de mesures prédéterminés.

9.  Dispositif de correction d'erreurs de relèvement systématiques d'un équipement de relèvement acoustique, notamment d'un sonar, présentant au moins une antenne de réception (1) comportant soit une pluralité de convertisseurs électroacoustiques ou optoacoustiques, soit une pluralité de convertisseurs électroacoustiques et optoacoustiques permettant de recevoir des ondes sonores de manière sélective du point de vue de leur orientation et de produire des signaux de réception (7), lesdits signaux de réception (7) d'une, de plusieurs ou de toutes les antennes de réception (1) pouvant être soumis à un traitement de signaux (8), et des angles de relèvement mesurés (10) affectés par le traitement des signaux (8) à des objectifs pouvant être déterminés, ces angles de relèvement (10) pouvant être précorrigés en présence d'un tableau de correction (14) affecté à l'antenne de réception (1),
**caractérisé par**
des moyens de détermination d'une position cible d'un objectif à des instants de mesure prédéterminés,
un module résiduel (22) destiné à déterminer au moins un écart (24) entre l'angle de relèvement mesuré (10) ou l'angle de relèvement précorrigé et un angle de relèvement appartenant à la position cible déterminée à au moins un instant de mesure prédéterminé,
une unité de saisie de valeurs de correction de relèvement (38) conçue de manière à élaborer ou à actualiser le tableau de correction (14), pour une, plusieurs ou toutes les antennes de réception (1), en vue de la précorrection des angles de relèvement mesurés (10) au moyen des écarts (24) déterminés pour l'antenne de réception (1) respective, et
un module de correction (12) destiné à corriger l'erreur de relèvement systématique pour chaque angle de relèvement mesuré (10) d'une, de plusieurs ou de toutes les antennes de réception (1) en fonction de valeurs de correction de relèvement connexes issues du tableau de correction (14).

10. Dispositif selon la revendication 9,
**caractérisé en ce que**
le tableau de correction (14) d'une, de plusieurs ou de toutes les antennes de réception (1) présente comme valeurs de correction de relèvement, au début de la correction des erreurs de relèvement systématiques, des zéros ou des valeurs de correction de relèvement déterminées au moyen d'un essai fonctionnel de l'antenne de réception (1) connexe, et
au cours de la correction des erreurs de relèvement systématiques, le tableau de correction (14) est actualisé au moins une fois en vue de la précorrection des angles de relèvement d'une, de plusieurs ou de toutes les antennes de réception (1), moyennant quoi des valeurs de correction de relèvement actuelles sont déterminées à l'aide des valeurs de correction de relèvement déjà existantes, des écarts déterminés (24) et des angles de relèvement mesurés (10) non corrigés.

11. Dispositif selon l'une des revendications 9 et 10,
**caractérisé en ce que**
une position cible de l'objectif peut être déterminée par au moins un capteur non acoustique (18), notamment un capteur radar du dispositif ou bien le dispositif est conçu de manière à déterminer une position cible de l'objectif en se fondant sur des données du Système d'identification automatique.

**12.** Dispositif selon l'une quelconque des revendications 9 à 11,
**caractérisé par le fait que**
le module résiduel (22) est conçu de manière à élaborer, pour chaque antenne de réception (1), une distribution de fréquences par relèvement, spécifique aux capteurs, des écarts déterminés (24) entre les angles de relèvement mesurés (10) ou les angles de relèvement précorrigés et les angles de relèvement déterminés par rapport à la position cible supposée, et pour établir la moyenne des écarts déterminés (24) à chaque relèvement spécifique aux capteurs.

**13.** Dispositif selon l'une quelconque des revendications 9 à 12,
**caractérisé par le fait que**
l'unité de saisie de valeurs de correction de relèvement (38) est conçue de manière à effectuer l'actualisation du tableau de correction (14) en faisant appel à des coefficients de pondération pour chaque angle de relèvement.

**14.** Dispositif selon l'une quelconque des revendications 9 à 13,
**caractérisé par le fait que**
l'unité de saisie de valeurs de correction de relèvement (38) est en outre conçue de manière à effectuer l'actualisation du tableau de correction (14) pour les angles de relèvement dont le nombre d'écarts déterminés (24) a dépassé une valeur seuil prédéterminée (34).

**15.** Dispositif selon l'une quelconque des revendications 9 à 14,
**caractérisé par le fait que**
le capteur non acoustique (18), notamment le capteur radar ou les données du Système d'identification automatique, sont en outre conçus pour effectuer, lors de la détermination de la position cible supposée, dans le cas de l'existence d'une série continue de mesures, un lissage des données de mesure de cette série de mesures ou une interpolation sur les instants de mesures prédéterminés.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10027538 C1
- DE 10353292 B3
- DE 102006019588 B3
- DE 102007019979
- US 20080034871 A1
- DE 10129726 C2
- DE 3446658 C2